# EUROPÄISCHE PATENTANMELDUNG

(11) **EP 3 970 662 A1**
(43) Veröffentlichungstag der Anmeldung: **23.03.2022**
(21) Anmeldenummer: 20196430.1
(22) Anmeldetag: 16.09.2020
(51) Int. Cl.: A61C 13/00

(54) **VERFAHREN ZUM ERZEUGEN EINES CAM-DATENSATZES**

(71) Anmelder: Ivoclar Vivadent AG, 9494 Schaan (LI)
(72) Erfinder: Geier, Markus, 39010 Tisens (IT); Mitterhofer, Martin, 39021 Latsch (IT)
(74) Vertreter: Baronetzky, Klaus

(57) **Zusammenfassung**

Die vorliegende Erfindung betrifft ein Verfahren zum Erzeugen eines CAM-Datensatzes, mit den Schritten eines Bereitstellens (S201) eines digitalen CAD-Datensatzes f r eine dentale Prothese mit ersten Referenzdaten f r eine erste r umliche Referenzgeometrie; eines Bereitstellens (S202) eines digitalen CAM-Datensatzes mit zweiten Referenzdaten f r eine zweite r umliche Referenzgeometrie; und eines Integrierens (S203) des CAD-Datensatzes in den CAM-Datensatz durch Ausrichten der ersten r umlichen Referenzgeometrie des CAD-Datensatzes an der zweiten r umlichen Referenzgeometrie des CAM-Datensatzes.

## Beschreibung

Die vorliegende Erfindung betrifft ein Verfahren zum Erzeugen eines CAM-Datensatzes und ein Computerprogramm zur Ausf hrung des Verfahrens.

Bei der Herstellung von dentalen Prothesen mittels eines CAD-Verfahrens treten Ungenauigkeiten auf, die darauf beruhen, das der CAD-Datensatz der dentalen Prothese ungenau in einen CAM-Datensatz eingebettet wird.

Es ist daher die technische Aufgabe der vorliegenden Erfindung, die CAD-Herstellung einer dentalen Prothese zu verbessern.

Diese Aufgabe wird durch technische Gegenst nde nach den unabh ngigen Anspr chen gel st. Weitere technisch vorteilhafte Ausf hrungsformen sind Gegenstand der abh ngigen Anspr che, der Beschreibung und der Zeichnungen.

Gem einem ersten Aspekt wird die technische Aufgabe durch ein Verfahren zum Erzeugen eines CAM-Datensatzes gel st, mit den Schritten eines Bereitstellens eines digitalen CAD-Datensatzes f r eine dentale Prothese mit ersten Referenzdaten f r eine erste r umliche Referenzgeometrie; eines Bereitstellens eines digitalen CAM-Datensatzes mit zweiten Referenzdaten f r eine zweite r umliche Referenzgeometrie; und eines Integrierens des CAD-Datensatzes in den CAM-Datensatz durch Ausrichten der ersten r umlichen Referenzgeometrie des CAD-Datensatzes an der zweiten r umlichen Referenzgeometrie des CAM-Datensatzes. Die Referenzgeometrie kann durch eine Referenzgeometrie angegeben werden, wie beispielsweise ein Referenzkreuz. Durch das Verfahren wird der technisehe Vorteil erreicht, dass sich der CAD-Datensatz optimal in den CAM-Datensatz integrieren I sst und eine sp tere Herstellung der dentalen Prothese in einem Fr sverfahren verbessert wird.

In einer technisch vorteilhaften Ausf hrungsform des Verfahrens umfasst der CAM-Datensatz Daten f r einen Rohling zur Herstellung der dentalen Prothese. Dadurch wird beispielsweise der technische Vorteil erreicht, dass sich die Gestaltung der dentalen Prothese bestm glich an den Rohling anpassen I sst.

In einer weiteren technisch vorteilhaften Ausf hrungsform des Verfahrens geben die Daten f r den Rohling eine kreisf rmige Scheibe wieder. Dadurch wird beispielsweise der technische Vorteil erreicht, dass sich der Materialaufwand f r das Herstellen der dentalen Prothese verringern I sst.

In einer weiteren technisch vorteilhaften Ausf hrungsform des Verfahrens geben die Daten f r den Rohling eine inhomogene Struktur des Rohlings zum Erzeugen eines Zahnfleischeindrucks wieder. Dadurch wird beispielsweise der technische Vorteil erreicht, dass sich auf einfache Weise eine dentale Prothese mit einem realistischen Zahnfleischrand erzeugen I sst.

In einer weiteren technisch vorteilhaften Ausf hrungsform des Verfahrens wird die inhomogene Struktur durch eine Wellenform gebildet. Dadurch wird beispielsweise der technische Vorteil erreicht, dass die Wellenform einen realistischen Zahnfleischrand erzeugt.

In einer weiteren technisch vorteilhaften Ausf hrungsform des Verfahrens gibt die erste und/oder zweite r umliche Referenzgeometrie eine r umliche Achse und/oder ein Referenzkreuz an. Dadurch wird beispielsweise der technische Vorteil erreicht, dass sich die beiden Datens tze gut aneinander ausrichten lassen.

In einer weiteren technisch vorteilhaften Ausf hrungsform des Verfahrens ist die r umliche Achse senkrecht zu einer Oberfl che eines Rohlings orientiert. Dadurch wird beispielsweise der technische Vorteil erreicht, dass die dentale Prothese besser visualisierbar ist.

In einer weiteren technisch vorteilhaften Ausf hrungsform des Verfahrens ist der CAM-Datensatz aus einer Mehrzahl von vorgespeicherten CAM-Datens tzen ausw hlbar. Dadurch wird beispielsweise der technische Vorteil erreicht, dass unterschiedliche CAM-Datens tze verwendet werden k nnen, die an die Gestaltung der dentalen Prothese angepasst sind.

In einer weiteren technisch vorteilhaften Ausf hrungsform des Verfahrens wird die dentale Prothese automatisch auf Basis des CAM-Datensatzes erzeugt. Dadurch wird beispielsweise der technische Vorteil erreicht, dass sich die dentale Prothese schnell herstellen I sst.

In einer weiteren technisch vorteilhaften Ausf hrungsform des Verfahrens wird der CAM-Datensatz in Fr sdaten zum Fr sen der dentalen Prothese umgewandelt. Dadurch wird beispielsweise der technische Vorteil erreicht, dass die dentale Prothese auf einfache Weise herstellen I sst.

In einer weiteren technisch vorteilhaften Ausf hrungsform des Verfahrens wird die dentale Prothese auf Basis der Fr sdaten von einer Fr seinrichtung gefr st. Dadurch wird beispielsweise ebenfalls der technische Vorteil erreicht, dass die dentale Prothese auf einfache Weise herstellen I sst.

Gem einem zweiten Aspekt wird die technische Aufgabe durch ein Computerprogramm gel st, umfassend Befehle, die bei der Ausf hrung des Computerprogramms durch einen Computer diesen veranlassen, das Verfahren nach einem der Anspr che 1 bis 11 auszuf hren. Durch das Computerprogramm werden die gleichen technischen Vorteile wie durch das Verfahren nach dem ersten Aspekt erreicht.

Ausf hrungsbeispiele der Erfindung sind in den Zeichnungen dargestellt und werden im Folgenden n her beschrieben.

Es zeigen:
- Fig. 1: ein Blockdiagramm eines Verfahrens zum Herstellen einer dentalen Prothese;
- Fig. 2: eine schematische Darstellung eines CAD- und eines CAM-Datensatzes; und
- Fig. 3: ein Blockdiagramm eines Verfahrens zum Erzeugen eines CAM-Datensatzes.

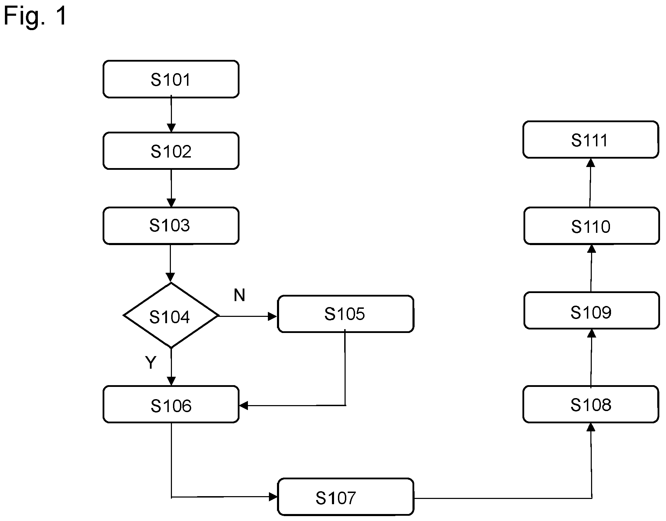

Fig. 1 zeigt ein Blockdiagramm eines Verfahrens zum Herstellen einer dentalen Prothese. In Schritt S101 wird in den dentalen CAD-Datensatz, der die r umliche Form der dentalen Prothese angibt, eine Referenzgeometrie f r einen Rohling als CAM-Datensatz importiert. Dieser stellt beispielsweise den Umfang und H he der Scheibe des Rohlings dar. Eine Wellenform zum Erzeugen eines Zahnfleischrandes kann ebenfalls visualisiert werden. Der CAM-Datensatz f r den Rohling kann zus tzlich zur Form die Eigenschaften des Rohlings angeben, wie beispielsweise eine inhomogene Struktur des Rohlings zum Erzeugen eines visuellen Zahnfleischeindrucks. Diese kann durch einen mehrfarbigen Rohling mit einer inhomogenen Farbverteilung (rosa/wei ) in Wellenform gebildet werden. In dem Rohling kann jedoch auch eine inhomogene Materialverteilung mit mehreren Materialien vorliegen, die ebenfalls von den CAM-Datensatz f r den Rohling wiedergegeben ist.

In Schritt S102 wird eine Referenzgeometrie angegeben, wie beispielsweise ein Referenzkreuz, das zur Ausrichtung der Prothese in der Scheibe, d.h. dem CAM-Datensatz dient. Die Referenzgeometire kann dabei au erhalb des r umlichen Bereichs der dentalen Prothese liegen. Die Referenzgeometrie kann in einem getrennten Datensatz vorgegeben sein, der ebenfalls in den CAD-Datensatz importiert wird. Im Allgemeinen k nnen als Referenzgeometrie auch andere geometrische Formen oder Strukturen verwendet werden. In Schritt S103 wird dann die Referenzgeometrie an dem Design der Prothese bestm glich ausgerichtet.

In Schritt S104 wird berpr ft, ob der Verlauf des Zahns oder der der Gingiva der Aufstellung mit der vorgesehenen Geometrie zusammenpasst. Ist dies der nicht der Fall, wird in Schritt S105 das Design mit den Werkzeugen der CAD-Software so angepasst, dass der bergang des Zahns oder der Gingiva entlang der vorgesehenen Geometrie verl uft.

Ist die berpr fung in Schritt S104 erfolgreich, wird in Schritt S106 das Referenzkreuz entlang des Kreuzes an der importierten Geometrie ausgerichtet und an die Prothesenbasis
angerechnet.

In Schritt S107 wird eine Datei der dentalen Prothese im STL-Format erstellt. Dabei findet eine Transformation des Datensatzes statt. Im Allgemeinen k nnen jedoch auch andere Datenformate verwendet werden, die f r einen sp teren Fr sprozess geeignet sind. Dabei k nnen auch Metadaten in den Datensatz integriert werden. In Schritt S108 wird der CAD-Datensatz f r die dentale Prothese in den CAM-Datensatz f r den Rohling importiert.

In Schritt S109 wird ein Ausrichten der dentalen Prothese in der Z-Achse mit Hilfe des Referenzkreuzes durchgef hrt und in Schritt S110 wird die dentale Prothese in X- und Y-Achse mit Hilfe des Referenzkreuzes ausgerichtet. Die Ausrichtung wird durch Drehen und Verschieben des CAD-Datensatzes der dentalen Prothese erreicht. Anschlie end folgt die Zahnaufstellung der dentalen Prothese der inhomogenen Farbverteilung in Wellenform des Rohlings. Dadurch I sst sich ein optimales sthetisches Ergebnis beim Fr sen erzielen. Die Ausrichtung kann derart durchgef hrt werden, dass die r umliche Referenzgeometrie des CAD-Datensatzes gegen ber der zweiten r umlichen Referenzgeometrie des CAM-Datensatzes verschoben und/oder gedreht wird.

In Schritt S111 werden die Daten zum Fr sen freigegeben und die dentale Prothese wird vollautomatisch aus dem Rohling durch eine gesteuerte Fr seinrichtung erzeugt.

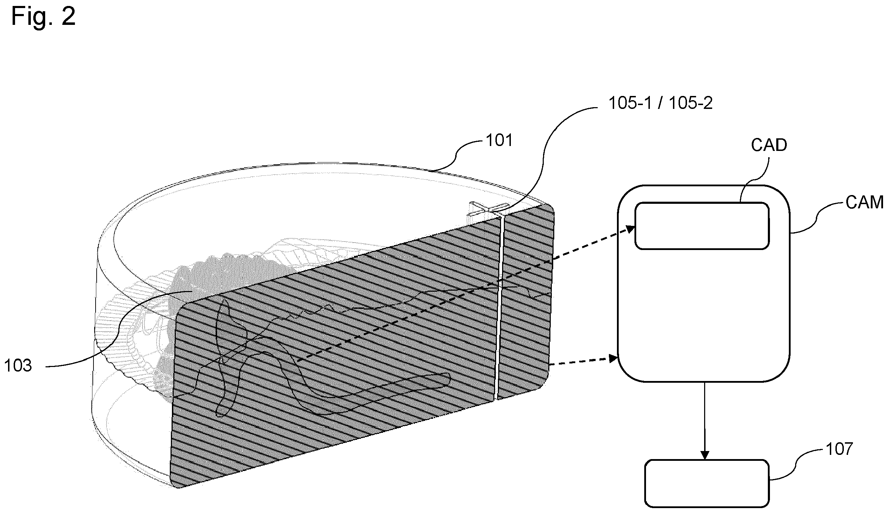

Fig. 2 zeigt eine schematische Darstellung eines CAD- und eines CAM-Datensatzes. Der CAD-Datensatz ist das Ergebnis einer r umlichen Planung und Gestaltung der dentalen Prothese 103 mittels einer CAD-Software. Bei dieser Planung und Gestaltung wird die Form und die farbliche Gestaltung der dentalen Prothese 103 festgelegt.

Der CAM-Datensatz spiegelt die Form und die Eigenschaften des Rohlings 101 wider und dient dazu spanabhebende Maschinen oder 3D-Drucker anzusteuern. Zu diesem Zweck wird der CAM-Datensatz beispielsweise an eine Fr seinrichtung 107 bermittelt, die mittels eines Fr swerkzeugs die dentale Prothese 103 aus dem Rohling 101 herausschneidet.

Der CAD-Datensatz CAD umfasst Daten ber eine Referenzgeometrie 105-1, wie beispielsweise ein Referenzkreuz oder einzelne Referenzpunkte. In gleicher Weise umfasst auch der CAM-Datensatz CAM vorgegebene Daten ber eine Referenzgeometrie 105-2, wie beispielsweise ein Referenzkreuz oder einzelne Referenzpunkte. Die beiden Referenzgeometrien 105-1 und 105-2 dienen dazu, den CAD-Datensatz CAD innerhalb des CAM-Datensatzes auszurichten, so dass das Design der dentalen Restauration bestm glich ausgerichtet werden kann. Dies erfolgt beispielsweise durch Drehen oder Verschieben des CAD-Datensatzes um oder entlang der Referenzgeometrien 105-1 und 105-2. Daneben kann die dentale Prothese 103 von der CAD- in die CAM-Software lagerichtig bertragen werden.

Dadurch wird die lagerichtige bergabe eines Designs, wie beispielsweise einer sogenannten Shell Disc Prothese, von der CAD- in die CAM-Software gew hrleitet werden. Mit Hilfe der Referenzgeometrie 105-1, die in die verwendete Shell Disc Geometrie integriert wird, wird in der CAD-Software als letzter Schritt die dentale Prothese 103 intergiert. Die Referenzgeometrie 105-1 ist ein Teil des Datensatzes der designten dentalen Prothese 103.

In der CAM-Software wird ein Datensatz f r eine Shell Disc mit der gleichen Referenzgeometrie 105-2 hinterlegt. Die designte dentale Prothese 103 mit der Referenzgeometrie 105-1 kann importiert werden und im Nesting mit Hilfe der Referenzgeometrie 105-1 an jene Referenzgeometrie 105-2 der Shell Disc ausgerichtet werden. Dadurch werden die r umlichen Koordinaten (X, Y, Z) der dentalen Prothese 103 in der Shell Disc bestimmt.

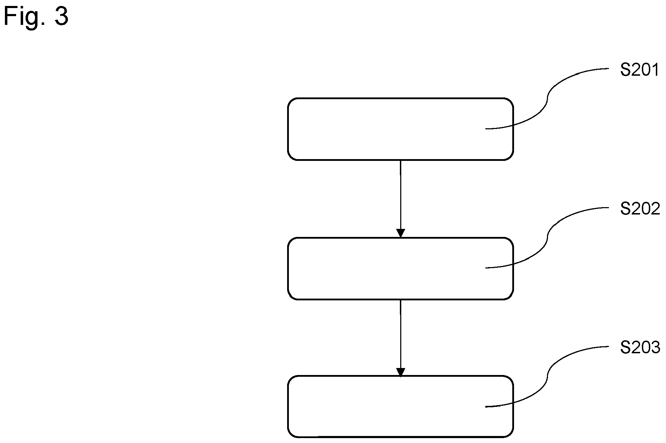

Fig. 3 zeigt ein Blockdiagramm eines Verfahrens zum Erzeugen eines CAM-Datensatzes. In einem ersten Schritt S201 wird ein digitaler CAD-Datensatzes f r eine dentale Prothese bereitgestellt, der erste Referenzdaten f r eine erste r umliche Referenzgeometrie umfasst. Die Referenzdaten sind beispielsweise Daten, die eine bestimmte r umliche Position innerhalb CAD-Datensatzes angeben. Die r umliche Position kann durch eine Referenzgeometrie vorgegeben werden, wie beispielsweise durch ein Referenzkreuz.

In Schritt S202 wird ein digitaler CAM-Datensatz mit zweiten Referenzdaten f r eine zweite r umliche Referenzgeometrie bereitgestellt. In Schritt S203 wird der CAD-Datensatz in den CAM-Datensatz durch Ausrichten der ersten r umlichen Referenzgeometrie des CAD-Datensatzes an der zweiten r umlichen Referenzgeometrie des CAM-Datensatzes integriert.

Durch das Verfahren zum Erzeugen eines CAM-Datensatzes kann die dentale Prothese 103 automatisch und schnell, lagerichtig von der CAD- in die CAM-Software bertragen werden.

Alle in Verbindung mit einzelnen Ausf hrungsformen der Erfindung erl uterten und gezeigten Merkmale k nnen in unterschiedlicher Kombination in dem erfindungsgem en Gegenstand vorgesehen sein, um gleichzeitig deren vorteilhafte Wirkungen zu realisieren.

Alle Verfahrensschritte k nnen durch Vorrichtungen implementiert werden, die zum Ausf hren des jeweiligen Verfahrensschrittes geeignet sind. Alle Funktionen, die von gegenst ndlichen Merkmalen ausgef hrt werden, k nnen ein Verfahrensschritt eines Verfahrens sein.

Der Schutzbereich der vorliegenden Erfindung ist durch die Anspr che gegeben und wird durch die in der Beschreibung erl uterten oder den Figuren gezeigten Merkmale nicht beschr nkt.

## Patentansprüche

1. Verfahren zum Erzeugen eines CAM-Datensatzes (CAM), mit den Schritten:
- Bereitstellen (S201) eines digitalen CAD-Datensatzes (CAD) f r eine dentale Prothese (103) mit ersten Referenzdaten f r eine erste r umliche Referenzgeometrie (105-1);
- Bereitstellen (S202) eines digitalen CAM-Datensatzes (CAM) mit zweiten Referenzdaten f r eine zweite r umliche Referenzgeometrie (105-2); und
- Integrieren (S203) des CAD-Datensatzes (CAD) in den CAM-Datensatz (CAM) durch Ausrichten der ersten r umlichen Referenzgeometrie (105-1) des CAD-Datensatzes (CAD) an der zweiten r umlichen Referenzgeometrie (105-2) des CAM-Datensatzes (CAM).

2. Verfahren nach Anspruch 1, wobei der CAM-Datensatz (CAM) Daten f r einen Rohling (101) zur Herstellung der dentalen Prothese (103) umfasst.

3. Verfahren nach Anspruch 2, wobei die Daten f r den Rohling (101) eine kreisf rmige Scheibe wiedergeben.

4. Verfahren nach Anspruch 2 oder 3, wobei die Daten f r den Rohling (101) eine inhomogene Struktur des Rohlings (101) zum Erzeugen eines Zahnfleischeindrucks wiedergeben.

5. Verfahren nach Anspruch 4, wobei die inhomogene Struktur durch eine Wellenform gebildet wird.

6. Verfahren nach einem der vorangehenden Anspr che, wobei die erste und/oder zweite r umliche Referenzgeometrie (105-1, 105-2) eine r umliche Achse und/oder ein Referenzkreuz angibt.

7. Verfahren nach Anspruch 6, wobei die r umliche Achse senkrecht zu einer Oberfl che eines Rohlings (101) orientiert ist.

8. Verfahren nach einem der vorangehenden Anspr che, wobei der CAM-Datensatz (CAM) aus einer Mehrzahl von vorgespeicherten CAM-Datens t-zen ausw hlbar ist.

9. Verfahren nach einem der vorangehenden Anspr che, wobei die dentale Prothese (103) automatisch auf Basis des CAM-Datensatzes (CAM) erzeugt wird.

10. Verfahren nach einem der vorangehenden Anspr che, wobei der CAM-Datensatz (CAM) in Fr sdaten zum Fr sen der dentalen Prothese umgewandelt wird.

11. Verfahren nach Anspruch 10, wobei die dentale Prothese (103) auf Basis der Fr sdaten von einer Fr seinrichtung (107) gefr st wird.

12. Computerprogramm, umfassend Befehle, die bei der Ausf hrung des Computerprogramms durch einen Computer diesen veranlassen, das Verfahren nach einem der Anspr che 1 bis 11 auszuf hren.
